(19) Europäisches Patentamt
European Patent Office
Office européen des brevets

(11) **EP 2 063 524 A1**

(12) **EUROPÄISCHE PATENTANMELDUNG**

(43) Veröffentlichungstag:
**27.05.2009 Patentblatt 2009/22**

(51) Int Cl.:
***H02P 3/04*** *(2006.01)*

(21) Anmeldenummer: 07121509.9

(22) Anmeldetag: **26.11.2007**

(84) Benannte Vertragsstaaten:
**AT BE BG CH CY CZ DE DK EE ES FI FR GB GR HU IE IS IT LI LT LU LV MC MT NL PL PT RO SE SI SK TR**
Benannte Erstreckungsstaaten:
**AL BA HR MK RS**

(71) Anmelder: **ABB Research Ltd.**
**8050 Zürich (CH)**

(72) Erfinder:
• **Schuderer, Jürgen**
**8047 Zürich (CH)**
• **Kessler, Reto**
**8004 Zürich (CH)**

• **Greuter, Felix**
**5406 Baden-Rütihof (CH)**

(74) Vertreter: **Berner, Thomas**
**ABB Schweiz AG,**
**Intellectual Property (CH-LC/IP),**
**Brown Boveri Strasse 6**
**5400 Baden (CH)**

Bemerkungen:
Ein Antrag gemäss Regel 139 EPÜ auf Berichtigung der Ansprüche und Beschreibung liegt vor. Über diesen Antrag wird im Laufe des Verfahrens vor der Prüfungsabteilung eine Entscheidung getroffen (Richtlinien für die Prüfung im EPA, A-V, 3.).

(54) **Entregungselement für die Aufnahme eines Entregungsstroms von einer induktiven elektrischen Last**

(57) Ein Entregungselement für die Aufnahme eines Entregungsstroms von einer induktiven elektrischen Last, insbesondere von einer Rotorspule einer Synchronmaschine umfasst mindestens einen Varistor zur Aufnahme zumindest eines Teils des Entregungsstroms, wobei der Varistor eine Keramik auf der Basis von Zinkoxid, Titanoxid, Zinnoxid oder Strontiumtitanat enthält. Das Entregungselement hat einen Widerstandswert von weniger als 1 kOhm.

Fig. 2 a

EP 2 063 524 A1

**Beschreibung**

**TECHNISCHES GEBIET**

Die vorliegende Erfindung betrifft allgemein ein Entregungselement für die Aufnahme eines Entregungsstroms z.B. von einer induktiven elektrischen Last, insbesondere einer Synchronmaschine bzw. der Rotorspule einer Synchronmaschine. Die vorliegende Erfindung betrifft weiter eine Entregungseinrichtung mit einem solchen Entregungselement, und eine Synchronmaschine mit einer solchen Entregungseinrichtung. Das Entregungselement erlaubt generell das Trennen einer elektrischen Last von einer Energieversorgung, bevorzugt einer Gleichstrom-Energieversorgung, wobei ein Strom von der elektrischen Last über das Entregungselement abgeleitet wird.

**STAND DER TECHNIK**

Erregungssysteme für Synchronmaschinen haben die Aufgabe die rotierende Erregerspule mit Gleichstrom zu speisen. Der Strom wird entweder von einer gesonderten rotierenden Erregermaschine oder durch einen statischen Stromrichtererreger zugeführt. Beide Typen erfordern ein Entregungssystem, mit welchem die Erregungsschaltung im Fehlerfall geöffnet wird, wobei eine schnelle Dissipation einer Energie, die beispielsweise in der Erregungsspule gespeichert ist, vorgenommen werden muss. Die einfachste Art der Entregung besteht darin, die Erregerwicklung kurzzuschließen. Die Entregung lässt sich beschleunigen, wenn die Erregerwicklung über einen äußeren Widerstand, den sog. Entregungswiderstand, kurzgeschlossen wird. Hierzu wird zunächst der Entregungswiderstand parallel zur Wicklung zugeschaltet, um daraufhin die Erregerspule von der Energieversorgung über eine Unterbrechereinheit zu trennen. Der Entregungswiderstand verkürzt nun die charakteristische Zeitkonstante der Entregung, welche durch die folgende Gleichung (1) beschrieben wird

$$\tau_R = L/R \qquad\qquad\qquad (1)$$

Hierbei bezeichnet $\tau_R$ die charakteristische Zeitkonstante für den Entregungsprozess, L die Induktivität der Erregerspule, und R den Gesamtwiderstand der Anordnung (Ableitwiderstand), welcher sich hauptsächlich aus dem Innenwiderstand der Spule und dem Entregungswiderstand zusammensetzt. Aus obiger Gleichung (1) kann ersehen werden, dass in nachteiliger Weise geringe Werte der Ableitwiderstände zu langen Entregungszeiten führen. Dies hat den Nachteil, dass der Strom in einem Fehlerfall nicht ausreichend schnell aus der beispielsweise als Synchronmaschine ausgebildeten Lasteinrichtung abgeführt werden kann.

Die US 6,021,051 beschreibt einen Leistungskonverter mit einer Klemmschaltung und einer Steuerung für ein schnelles Abschalten einer Ausgangsspannung. In Reihe zu einer Triggereinrichtung zum Abschalten der Ausgangsspannung weist die in der US 6,021,051 offenbarte Schaltungseinrichtung einen Spannungsbegrenzungswiderstand angeordnet auf.

Ein Nachteil derartiger ohmscher, d.h. linearer, Entregungswiderstände besteht darin, dass die Entregungszeit sehr lang ist, da der Widerstand klein gewählt werden muss. Dies ist der Fall

1.) um die Spannung begrenzen, die an dem Entregungswiderstand bzw. der Erregungsvorrichtung anliegt. Das ist nötig um die Isolierung der Erregerwicklung nicht zu gefährden, und um die zulässige Schaltspannung der Unterbrechereinheit (Feldschalter) nicht zu überschreiten;

2.) um eine schnelle Stromkommutation in den resistiven Pfad zu gewährleisten, damit der zu unterbrechende Strom, die Lichtbogenzeit und / oder die Verluste im Unterbrecher begrenzt sind. Die Lichtbogenzeit kann insbesondere gross sein, wenn kleine Rotorströme entregt werden müssen, weil gewöhnlich die Geschwindigkeit des Spannungsaufbaus im Schalter mit dem Strom skaliert.

Um die Entregung weiter zu beschleunigen werden nichtlineare Entregungswiderstände (Varistoren) eingesetzt, welche ihren Widerstand in Abhängigkeit der anliegenden Spannung ändern. Wenn nun während des Entregungsprozesses die Spannung abklingt, führt dies zu einem Anstieg des Varistorwiderstandes, sodass effektiv ein höherer Widerstand während der Entregung vorhanden ist, welcher gemäß Gleichung (1) zu einer niederen Entregungszeit führt.

Typischerweise werden Varistoren auf der Basis von Siliziumcarbid (SiC) eingesetzt. Letztere weisen jedoch die folgenden Unzulänglichkeiten auf:

(1) SiC als Varistormaterial ist kommerziell weitgehend durch Zinkoxid (ZnO) ersetzt worden, was den Bezug des Materials unsicher macht und dessen Kosten erhöht.

(2) Die Entregungszeit ist umso geringer je höher die Nichtlinearität des Materials ist. SiC verfügt jedoch nur über eine schwache Nichtlinearität mit einem Nichtlinearitätskoeffizient $\alpha$ (definiert über eine Varistorkennlinie gemäß I $\sim U^\alpha$) im Bereich von 1.8 - 7.7. Varistoren basierend auf ZnO verfügen über $\alpha$ -Werte größer oder gleich 30 [Zinke, Seither: "Widerstände, Kondensatoren, Spulen und ihre Werkstoffe, Springer Verlag, 1982].

(3) Die Einstellung der Spannungs-Strom Kennlinie ist bei SiC nur beschränkt möglich.

Varistoren auf der Basis von ZnO werden weitläufig für den Überspannungsschutz eingesetzt. Hierbei weist sich der hohe Nichtlinearitätskoeffizient und die über weite Bereiche einstellbare Kennlinie als klarer Vorteil gegenüber SiC aus.

Gewöhnliche ZnO Varistoren mit hoher Nichtlinearität können jedoch nicht als Entregungswiderstände eingesetzt werden, weil erstens die hohe Nichtlinearität leicht zu unsymmetrischen Stromverteilungen für parallel geschaltete Elemente führt, und weil zweitens der Widerstand für kleine Spannungen (unterhalb der Schaltspannung des Varistors) sehr gross ist ($\rho \sim 10^{10}$-$10^{12}\Omega$cm), was dazu führt dass der Strom erst in den Entregungspfad kommutieren wird, wenn der Schalter erheblich Spannung aufgebaut hat, d.h., für lange Zeit den unbegrenzten Strom im Lichtbogens tragen musste. Die Schaltspannung oder Schaltfeldstärke eines Varistors bezeichnet generell diejenige Spannung bzw. Feldstärke, bei welcher der elektrische Widerstand des Varistors stark abfällt, etwa wenn der Varistor oberhalb dieser Werte hochgradig leitfähig wird. In dieser Anmeldung sind diese Werte wie folgt definiert: Die Schaltspannung bzw. Schaltfeldstärke ist der Wert der Spannung bzw. Feldstärke des Varistors, bei dem seine Strom-Spannungs-Kennlinie einen maximalen Nichtlinearitätskoeffizienten aufweist (Wendepunkt in der Kennlinie). Bei ZnO-Ableitern liegt die Schaltspannung bei einer Stromdichte von etwa 0,1 - 1mA/cm$^2$. Die Schaltfeldstärke kann beispielsweise bei ca. 170V/mm liegen. In diesem Fall ergibt sich etwa eine Schaltspannung von 1.7kV, wenn die Varistorscheibe auf einen Dicke von 1cm zugeschnitten ist.

Zusätzlich zum Entregungswiderstand gibt es die Möglichkeit, die Entregung zu beschleunigen, indem die Erregerwicklung an eine negative Spannung gelegt wird. Bei Stromrichtererregung gelingt dies dadurch, dass der Stromrichter in den Wechselbetrieb gesteuert wird. Auch hier gilt, dass die Zeitkonstante der Entregung durch den Widerstand des Entregungkreises bestimmt ist.

In der WO/2005/017933 sind eine Vorrichtung und ein Verfahren zum Steuern von elektrischen Schalteinrichtungen offenbart. Hierbei soll die Bewegung eines Ankers eines elektromagnetischen Schaltgeräts, insbesondere eines Relais, bei einem Schaltvorgang optimiert werden. Zu diesem Zweck wird die Entregung einer Schaltspule durch eine Gegenspannung beschleunigt, womit die Zeitkonstante einer Regelung verringert wird. Dadurch, dass eine Gegenspannung bereitgestellt wird, ist jedoch eine relativ aufwändige Schaltungsanordnung erforderlich.

## DARSTELLUNG DER ERFINDUNG

Es ist somit eine Aufgabe der vorliegenden Erfindung, zumindest einige der oben beschriebenen Nachteile zu vermindern. Es ist insbesondere erwünscht, dass ein Entregungselement einen einfachen Schaltungsaufbau und ohne ein Auftreten von unzulässigen Überspannungen kurze Entregungszeiten ermöglicht.

Diese Aufgabe wird erfindungsgemäß durch ein Entregungselement gemäß Patentanspruch 1 gelöst. Ferner wird die obige Aufgabe durch eine Entregungseinrichtung gemäß Patentanspruch 16, durch eine Synchronmaschine gemäß Patentanspruch 17 und durch das in den Patentansprüchen 18 und 23 angegebene Verfahren zum Abschalten einer induktiven elektrischen Last gelöst. Weitere Ausgestaltungen der Erfindung ergeben sich aus den Unteransprüchen, der Beschreibung und den Figuren.

Nach einem Aspekt der Erfindung wird ein Entregungselement für die Aufnahme eines Entregungsstroms von einer induktiven elektrischen Last, d.h. Lasteinrichtung, zur Verfügung gestellt. Eine induktive elektrische Last ist eine elektrische Last mit nicht vernachlässigbarer Induktivität, die jedoch zusätzlich auch nicht-induktive Charakteristiken wie einen Widerstand oder eine Kapazität aufweisen kann. Eine solche Last kann eine Spule, etwa eine Rotorspule, der Synchronmaschine sein.

Das Entregungselement umfasst mindestens einen Varistor (d.h. ein beliebiges Widerstandselement mit nichtlinearer Strom-Spannungs-Kennlinie) zur Aufnahme zumindest eines Teils des Entregungsstroms. Das Varistormaterial enthält eine Keramik auf Basis von elektrisch nichtlinearem ZnO, TiO2, SnO2 oder SrTiO3, bevorzugt aus ZnO, welches etwa mit mindestens einem der Dotierstoffe Bi, Co, Mn, Cr, Sn, Sb, Si, Al, Ga, In, Ni, Ba, seltene Erden versehen sein kann. Hierbei kann der Varistor etwa als Vollkeramik oder als Kompositverbindung aufgebaut sein. Im Komposit ist das Varistormaterial als Füllstoff in einem Matrixmaterial eingelagert, wobei das Matrixmaterial Glas, Keramik, Kunststoff oder Metall sein kann.

Das Entregungselement hat bei jeder für den Betrieb vorgesehenen Spannung einen Widerstandswert von weniger als 1 kOhm. In bevorzugten Ausführungsformen beträgt dieser Widerstandswert weniger als 100 Ohm, weniger als 10 Ohm, oder sogar nur weniger als 0.1 Ohm. Für den Betrieb vorgesehene Spannungen sind alle Spannungen, für die das Entregungselement ausgelegt ist oder die etwa bei der Entregung erwartet werden können. Diese Spannungen können positive und negative Spannungen umfassen. Typischerweise umfassen die für den Betrieb vorgesehenen Spannungen zumindest alle Beträge unterhalb $10^3$ oder sogar unterhalb $10^4$ V.

Durch den Varistor ist es möglich, die Strom-SpannungsCharakteristik des Entregungselements so vorzusehen, dass der Widerstandswert des Entregungselements mit zunehmendem Entregungsstrom abnimmt. In zweckmäßiger Weise ist es damit möglich, bei hohen Strömen einen niedrigen Ableitwiderstand vorzusehen, so dass bei der Entregung einer elektrischen Last zunächst keine Überspannungen an dem Entregungselement auftreten.

Bei niedrigeren Strömen kann sodann ein höherer Widerstand des Varistors vorgesehen werden. Mit zunehmender Entregung der elektrischen Last, im Verlaufe der der Entregungsstrom verringert wird, wird dann der Ableitwiderstand erhöht. Gemäß der oben angegebenen Gleichung (1) verringert sich durch die Erhöhung des Ableitwiderstands R die Zeitkonstante zur Entregung, d.h. die gesamte Entregungszeit.

Eine bevorzugte Charakteristik des Entregungselementes weist die folgenden drei Eigenschaften auf:

1. Ein begrenzter elektrischer Widerstand, etwa R < 1kOhm, um eine schnelle Stromkommutation in den Entregungskreis zu ermöglichen und damit den zu unterbrechenden Strom und dessen Verluste im Schalter zu verringern:

Dies wird in einer Ausführungsform durch ein parallel zu dem Varistor geschaltetes Parallelwiderstandselement erreicht. Das Parallelwiderstandselement kann integral mit dem Varistor, etwa als eine zusätzliche Materialschicht, oder als eigenes Bauelement ausgebildet sein. Auch kann der Parallelwiderstand über das Matrixmaterial eines Varistorkomposites realisiert sein.

Die Begrenzung des Widerstands kann auch durch eine Behandlung des Varistormaterials erfolgen, die das Erreichen eines hohen Leckstromes zur Folge hat. Beispielsweise sind folgende Behandlungsverfahren - entweder für sich oder in Kombination miteinander oder mit weiteren Verfahren - geeignet, die gewünschten Materialeigenschaften zu erreichen:

- Dotierung des Materials des Varistors, z.Bsp mit Elementen, die die elektrische Leitfähigkeit der ZnO Körner erhöhen, wie etwa Aluminium,
- spezielle Wärmebehandlung während des Sinterns, wie etwa die Verwendung einer geringen Abkühlrate < 40°C/h von der Sintermaximaltemperatur im Temperaturbereich > 1000°C,
- eine reduzierende Atmosphäre beim Sintervorgang, wobei dies nicht zwingend ist und die gewünschten Eigenschaften auch durch Sintern etwa in einer oxidirerenden Athmosphäre erreicht werden können;
- ein zusätzlicher Temper-Schritt nach dem Sintern(etwa bei einer Temperatur zwischen 200 und 900°C, bevorzugt zwischen 500 und 750°C), und / oder
- Behandlung einer Oberfläche des Materials z.B. durch Aufschmelzen oder Ätzen.

2. Ein beschränkter Nichtlinearitätskoeffizient $\alpha$, etwa $\alpha < 15$ für hohe Stromdichten, etwa j > 100A/cm2, um Stromvariabilitäten für parallel geschaltete Varistorblöcke klein zu halten:

In einer Ausführungsform wir dies durch ein in Serie zu dem Varistor geschaltetes Serienwiderstandselement erreicht. Das Serienwiderstandselement kann integral mit dem Varistor, etwa als eine zusätzliche Materialschicht, oder als eigenes Bauelement ausgebildet sein. Auch kann der Serienwiderstand über das Matrixmaterial eines Varistorkomposites realisiert sein.

Die Begrenzung des Nichtlinearitätskoeffizienten kann auch durch eine geeignet gewählte Prozessatmosphäre und Temperaturverlauf des Sinter- und Temperprozesses erreicht werden. Hierzu kann etwa eine oxidierende oder reduzierende Atmosphäre während des Sinterns (siehe oben), oder eine reduzierende Atmosphäre während einer zusätzlichen thermischen Behandlung nach dem Sintern beitragen, wobei die Temperaturbehandlung vorzugsweise im

Bereich von 500°C bis 750°C durchgeführt wird. Die Begrenzung des Nichtlinearitätskoeffizienten kann ferner durch eine geeignete Abkühlrate nach dem Sintern erreicht werden, etwa durch eine Abkühlrate von weniger als 40°C/h, ausgehend von der Sintermaximaltemperatur und im Temperturbereich oberhalb 1000°C.

Auch kann eine Dotierung des Varistor-Materials erfolgen, etwa eine reduzierte Dotierung, d.h. eine Dotierung in geringerer Konzentration oder mit einer geringen Anzahl verschiedener Dotier-Elemente. Vorzugsweise wird die Konzentration von Cobalt und/oder Mangan als Dotierstoffen auf maximal 1 mol%, vorzugsweise auf 0.1 mol% begrenzt, und in einer bevorzugten Ausführungsform enthält das Varistor-Material keine Cobalt- und/oder Mangan-Dotierung, und in einer besonders bevorzugten Ausführungsform erfolgt die Dotierung ausschließlich mit Wismut.

3. Ein möglichst hoher Nichtlinearitätskoeffizient $\alpha$ des Varistors, mindestens $\alpha > 2$, zumindest bei der Schaltspannung und / oder für moderate bis kleinen Stromdichten, etwa $j < 1A/cm^2$, um eine schnelle Entregung zu erzielen.

Gemäß einem weiteren Aspekt weist eine elektronische Schaltvorrichtung zum Schalten der elektrischen Last auf:

a) eine erste Anschlusseinheit zur elektrischen Verbindung mit einem ersten Anschluss der elektrischen Last;
b) eine zweite Anschlusseinheit zur elektrischen Verbindung mit einem zweiten Anschluss der elektrischen Last; und
c) eine parallel zu der elektrischen Last geschaltete Ableiteinrichtung zum Ableiten eines Entregungsstroms von der elektrischen Last, wobei die Ableiteinrichtung aufweist:
c1) mindestens ein Schaltelement zum Durchschalten eines Strompfads für den Entregungsstrom; und
c2) ein in Reihe zu dem mindestens einen Schaltelement geschaltetes Entregungselement wie oben beschrieben.

Gemäß einem weiteren Aspekt weist ein Verfahren zum Schalten einer elektrischen Last mittels einer Schaltvorrichtung die folgenden Schritte auf:

a) Trennen einer elektrischen Last von der Energieversorgungseinrichtung mittels einer Unterbrechereinheit; und
b) Ableiten eines Entregungsstroms von der elektrischen Last über eine parallel zu der elektrischen Last geschaltete Entregungseinrichtung wie oben beschrieben.

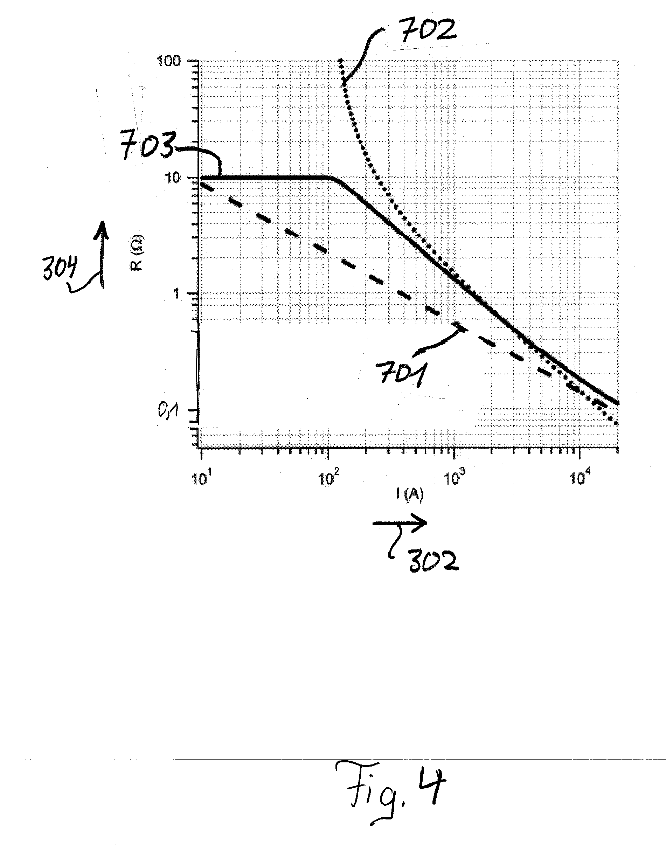

Der geringe Widerstandswert des Entregungsmaterials kann in der Praxis nicht durch eine geeignete Dimensionierung des Varistormaterials allein erreicht werden. Etwa um bei einem herkömmlichen ZnO-Varistor, der bei geringen Strömen eine extrem hohe Resistivität hat (siehe gepunktete Linie in Fig. 4), einen Widerstand gemäß Anspruch 1 zu erreichen, müsste ein nicht herstellbares Seitenverhältnis des Varistors gewählt werden. Auch wäre die Kontaktierung eines Varistors mit einem solchen Seitenverhältnis kaum vorstellbar.

## KURZE BESCHREIBUNG DER ZEICHNUNGEN

Ausführungsbeispiele der Erfindung sind in den Zeichnungen dargestellt und in der nachfolgenden Beschreibung näher erläutert.

In den Zeichnungen zeigen:

Figur 1     eine elektronische Schaltvorrichtung mit Energieversorgungseinrichtung, Stromrichtereinrichtung, Unterbrechereinheit und Entregungseinrichtung, gemäß einem bevorzugten Ausführungsbeispiel der vorliegenden Erfindung;

Figur 2a    die in Figur 1 dargestellte elektronische Schaltvorrichtung mit modifizierter Entregungseinrichtung, welche zusätzlich bereitgestellte ohmsche Widerstandselemente aufweist;

Figur 2b    ein schematisches Anordnungsdiagramm einer Entregungseinrichtung mit ohmschen Parallelwiderstandselementen und ohmschen Serienwiderstandselementen sowie einem Entregungselement für eine Schaltungsanordnung gemäß Figur 2a;

Figur 3     den Verlauf einer Entregungsspannung, welche über einem Entregungselement anliegt, als Funktion eines durch das Entregungselement fließenden Entregungsstroms für unterschiedliche Strom-Spannungscharakteristika des Entregungselements;

Figur 4     Werte des Entregungselementwiderstands als Funktion des durch den Entregungselementwiderstand fließenden Entregungsstroms für unterschiedliche Ausführungsformen des Entregungselements, d.h. es sind unterschiedliche Widerstandsverläufe dargestellt; und

Figur 5     den Verlauf einer Varistorfeldstärke als Funktion einer Varistorstromdichte für unterschiedliche Ausführungsformen des Varistorelements, d.h. es sind unterschiedliche Feldstärkeverläufe dargestellt.

In den Figuren bezeichnen gleiche Bezugszeichen gleiche oder funktionsgleiche Komponenten oder Schritte.

## WEGE ZUR AUSFÜHRUNG DER ERFINDUNG

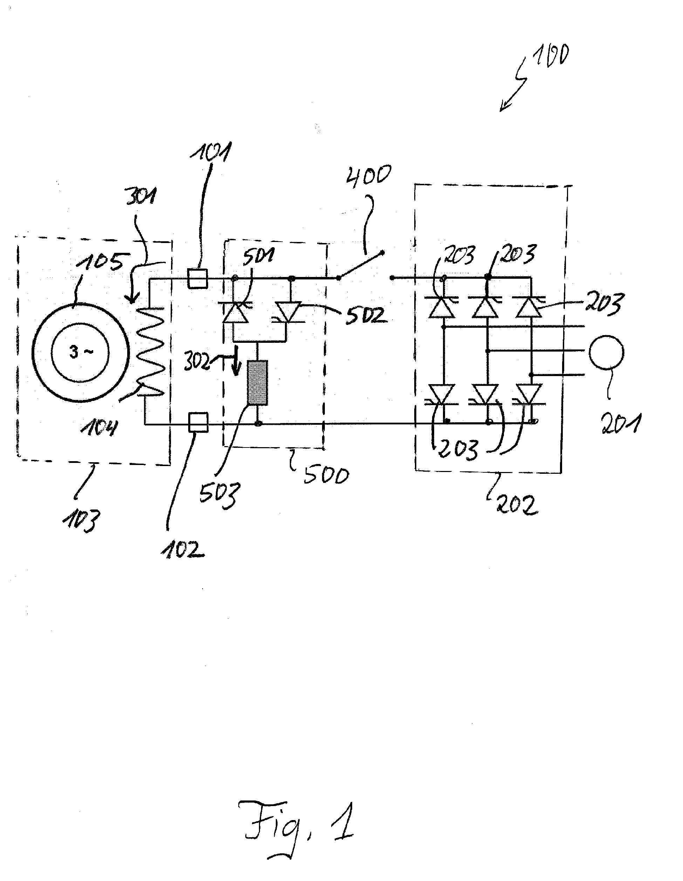

Figur 1 zeigt ein bevorzugtes Ausführungsbeispiel einer elektronischen Schaltvorrichtung 100. Die in Figur 1 gezeigte Schaltvorrichtung 100 besteht aus drei Schaltungsblöcken, d.h. einer elektrischen Lasteinrichtung 103, einer Entregungseinrichtung (oder Ableiteinrichtung) 500 und einer Stromrichtereinrichtung 202. Die Stromrichtereinrichtung 202 ist ferner mit einer Energieversorgungseinrichtung 201 zur Energieversorgung der gesamten Schaltungsanordnung, die in Figur 1 gezeigt ist, verbunden.

Die von der Energieversorgungseinrichtung 201 gelieferte elektrische Energie wird mittels der Stromrichtereinrichtung 202 dreiphasig konvertiert, um beispielsweise eine in der elektrischen Lasteinrichtung 103 enthaltene Synchronmaschine 105 anzusteuern. Zum Zuführen der in der Energieversorgungseinrichtung 201 erzeugten elektrischen Energie zu der Lasteinrichtung 103 über einen Betriebsstrom 301 wird die Unterbrechereinheit 400 geschlossen. Es sei darauf hingewiesen, dass die Unterbrechereinheit 400 als eine elektronische Schalteinheit ausgebildet sein kann.

Die Stromrichtereinrichtung 202 weist unter anderem sechs Thyristorelemente 203 auf, die eine Zufuhr des Betriebsstroms 301 zu der Synchronmaschine 105 sicherstellen. Da dem Fachmann derartige, wie in Figur 1 gezeigte Stromrichtereinrichtungen bekannt sind, wird auf eine detaillierte Beschreibung bzw. auf eine detaillierte Veranschaulichung der Stromrichtereinrichtung 202 hier verzichtet.

Die elektrische Lasteinrichtung 103 ist über Anschlusseinheiten 101, 102 mit der übrigen Schaltungsanordnung, d.h. der Stromrichtereinrichtung 202 und der Ableiteinrichtung 500 verbunden. D.h., ein erster Anschluss der Lasteinrichtung 103 ist mit einer ersten Anschlusseinheit 101 verbunden, während ein zweiter Anschluss der elektrischen Lasteinrichtung 103 mit einer zweiten Anschlusseinheit 102 verbunden ist.

In einem Fehlerfall unterbricht die Unterbrechereinheit 400 die Energiezufuhr von der Energieversorgungseinrichtung 201 und der Stromrichtereinrichtung 202 zu der elektrischen Lasteinrichtung 103, indem die Unterbrechereinheit 400 beispielsweise elektronisch geöffnet wird. In einem derartigen Fall muss die in reaktiven Elementen der elektrischen Lasteinrichtung 103 gespeicherte Energie abgebaut werden. Zu diesem Zweck ist die Ableiteinrichtung 500 vorgesehen, welche aus einem ersten Ableitthyristor 501, einem zweiten Ableitthyristor 502, welche parallel geschaltet sind, und einem in Serie zu der Parallelschaltung des ersten Ableitthyristors 501 und des zweiten Ableitthyristors 502 geschalteten Entregungselement (oder Ableitelement) 503 besteht.

Gleichzeitig mit einer Unterbrechung der elektrischen Verbindung zwischen der elektrischen Lasteinrichtung 103 und der Konvertereinrichtung 202 mittels der Unterbrechereinheit 400 werden die ersten und zweiten Ableitthyristoren 501, 502 durchgeschaltet, so dass ein Entregungsstrom 302 aus der Lasteinrichtung 103 über das Ableitelement 503 fließen kann.

In dem bevorzugten Ausführungsbeispiel der vorliegenden Erfindung wird die Ableiteinrichtung 500 zum Abbau einer in einer Synchronmaschine gespeicherten Energie herangezogen. Hierbei ist die Energie im Wesentlichen in einer Rotorspule 104 der Synchronmaschine 105 gespeichert, wobei in dem gezeigten Ausführungsbeispiel die elektrische Lasteinrichtung 103 durch die Rotorspule 104 und die Synchronmaschine 105 ausgebildet ist. Die Rotorspule 104 ist mit ihren beiden Anschlüssen zwischen die erste Anschlusseinheit 101 und die zweite Anschlusseinheit 102 geschaltet. Der Entregungsstrom 302 fließt so lange, bis eine vollständige Entregung der Rotorspule 104 stattgefunden hat, d.h. bis die Energie, die in der Rotorspule 104 gespeichert ist, vollständig abgebaut worden ist.

Erfindungsgemäß ist das Ableitelement 503 als ein nichtlinearer Widerstand ausgebildet, wodurch eine Entregungszeit verringert werden kann. Denn bei einem linearen Widerstand müsste der Widerstand sehr klein gewählt werden, um es zuzulassen, dass eine Stromkommutation auf den resistiven Pfad erfolgt, wobei gleichzeitig die an dem Ableitelement 503 abfallende Spannung begrenzt ist" Wie obenstehend unter Bezugnahme auf Gleichung (1) erläutert, ist eine typische Entregungszeit für eine derartige Ableiteinrichtung 500 durch eine Zeitkonstante $\tau_R = L/R$ gegeben.

Hieraus ergibt sich, dass in nachteiliger Weise geringe Werte von linearen Ableitwiderständen zu langen Entregungszeiten führen. Dies hat den Nachteil, dass Strom in einem Fehlerfall nicht ausreichend schnell aus der beispielsweise als Synchronmaschine ausgebildeten Lasteinrichtung abgeführt werden kann.

Unter Vernachlässigung des Rotorinnenwiderstandes, ergeben sich für einen gegebenen Nichtlinearitätskoeffizienten $\alpha$ des Ableitelements 503 die in folgender Gleichung (2) aufgeführten Strom- und Spannungsverläufe [LM. Levinson (Editor), "Ceramic Transactions: Advances in Varistor Technology Vol. 3", The American Ceramic Society, Inc, 1988.]:

$$I(t) = I_0 \left( 1 - \frac{U_0 (1 - \alpha^{-1})}{L I_0} \cdot t \right)^{\frac{\alpha}{\alpha - 1}}, U(t) = U_0 \left( 1 - \frac{U_0 (1 - \alpha^{-1})}{L I_0} \cdot t \right)^{\frac{1}{\alpha - 1}}$$

$$(2)$$

Hierbei bezeichnet I(t) den durch das Ableitelement 503 fließenden Strom, d"h" den Entregungsstrom 302, während U(t) die an dem Ableitelement 503 anliegende Spannung bei dem Stromfluss I(t) bezeichnet. $I_0$ und $U_0$ sind die jeweiligen Anfangswerte für Strom und Spannung bei Beginn der Entregung, d.h. zu dem Zeitpunkt eines Durchschaltens der in Figur 1 gezeigten ersten und zweiten Ableitthyristoren 501 bzw. 502. Mit L ist die Induktivität der Erregungsspule, d.h. der in Figur 1 gezeigten Rotorspule 104 bezeichnet. Die Variable t bezeichnet den Zeitverlauf. Aus der oben erläuterten Gleichung (2) ergibt sich der in untenstehender Gleichung (3) dargestellte Zusammenhang zwischen zeitlichem Stromverlauf I(t) durch das Ableitelement 503 und zeitlichem Spannungsverlauf U(t) an dem Ableitelement 503 als Funktion des Nichtlinearitätskoeffizienten $\alpha$.

$$I(t) = U(t)^\alpha \tag{3}$$

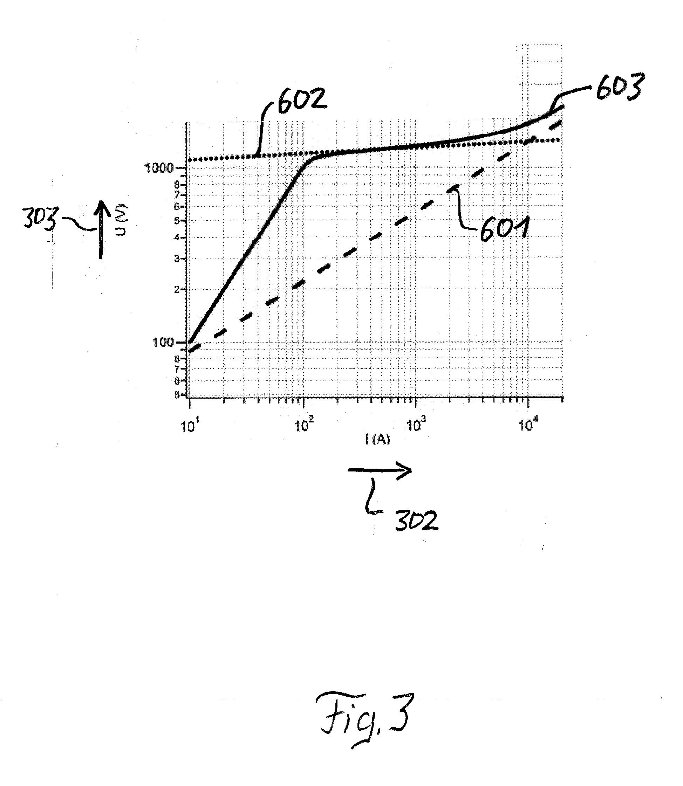

Es sei angemerkt, dass $\alpha$ in der Realität nicht konstant über den gesamten Strom/Spannungsbereich ist, sondern in der Regel selbst auch eine Funktion der Spannung ist.
Untenstehend werden unter Bezugnahme auf die Figuren 3, 4 und 5 unterschiedliche Ableitelemente mit unterschiedlichen Nichtlinearitätskoeffizienten $\alpha$ sowie unterschiedlichen Kombinationen mit ohmschen Parallelwiderstandselementen bzw. ohmschen Serienwiderstandselementen in ihren charakteristischen elektrischen Eigenschaften dargestellt. Bevorzugte Werte für den Nichtlinearitätskoeffizienten $\alpha$ liegen in einem Bereich zwischen 2 bis 30.

Je höher der Nichtlinearitätskoeffizient $\alpha$ des Ableitelements 503 (beispielsweise des Varistors) ist, desto schneller wird der Entregungsprozess erreicht. Eine schnelle Entregung ist angestrebt, um einen Überstrom zu begrenzen und Beschädigungen aufgrund einer überhöhten Temperatur zu vermeiden.

Typischerweise sind vorbekannte nichtlineare Ableitelemente 503 aus einer Materialkombination wie SiC ausgebildet. SiC weist typischerweise einen Nichtlinearitätskoeffizienten $\alpha$ im Bereich von 1.8 bis 7.7 auf. Ein Siliziumcarbid-Kompositmaterial ist jedoch in vielen Fällen schwer erhältlich und nicht in jeder Zusammensetzung leicht herstellbar.

Die erfindungsgemäße Alternative besteht in einem Varistor (einem spannungsabhängigen Widerstand), der ein ZnO, $TiO_2$, $SnO_2$ oder $SrTiO_3$ Material, bevorzugt ZnO umfasst. Derartiges Material weist eine deutliche höhere Nichtlinearität auf, mit Nichtlinearitätskoeffizienten von $\alpha = 30$ oder höher.

Dennoch wurden ZnO-basierte Varistoren für die Entregung bisher nicht in Betracht gezogen, da ein Parallelschalten einer ausreichenden Zahl derartiger einzelner Elemente oder eine geeignete Dimensionierung ausgeschlossen schien. Bei einem übergroße Nichtlinearitätskoeffizienten $\alpha$ von etwa 30 steht nämlich zu befürchten, dass eine das Anordnen unterschiedlicher Widerstandseinheiten in einer parallelen Schaltungskonfiguration unmöglich ist: Bei einer Parallelschaltung mehrerer ZnO-Varistoren oder bei parallelen Strompfaden innerhalb einem solchen Varistor besteht die Gefahr, dass eine nicht-gleichförmige Stromverteilung z.B. unter den Elementen auftritt, die zur Zerstörung einzelner Elemente führen kann, welche einen höheren Strom als die übrigen Elemente tragen. Darüber hinaus führt der hohe Widerstandswert von ZnO für die Niedrigspannungsbedingungen gerade am Anfang einer Stromunterbrechung zu erhöhten Verlusten bei einer Schaltungsunterbrechung. Je niedriger der Widerstandswert des Entregungswiderstandes während eines Öffnens einer Unterbrechereinheit ist, desto weniger Lichtbogenspannung muss zur Unterbrechung des Stroms unterbrochen werden, d.h. desto weniger Energie wird in der Unterbrechereinheit (Feldschalter) dissipiert. Auf diese Weise ergibt sich erst mit niedrigeren Widerstandswerten auch bei geringem Strom für ein Ableitelement 503 ein zuverlässiger Unterbrecherprozess. Entsprechend ist in Ausführungsformen der Erfindung der Varistor dahingehend modifiziert, dass die hohe Nichtlinearität des Varistor-Materials eingeschränkt wird und insbesondere bei niedrigen Spannungen der Widerstand etwa auf unter 1 kOhm begrenzt wird.

In dem in Figur 1 gezeigten Beispiel ist als ein Ableitelement 503 ein Element mit einer Materialzusammensetzung aus ZnO bereitgestellt. Untenstehend werden die Strom-Spannungscharakteristika und Widerstands- bzw. Feldstärkeverläufe derartiger Ableitelemente unter Bezugnahme auf die Figuren 3 bis 5 erläutert.

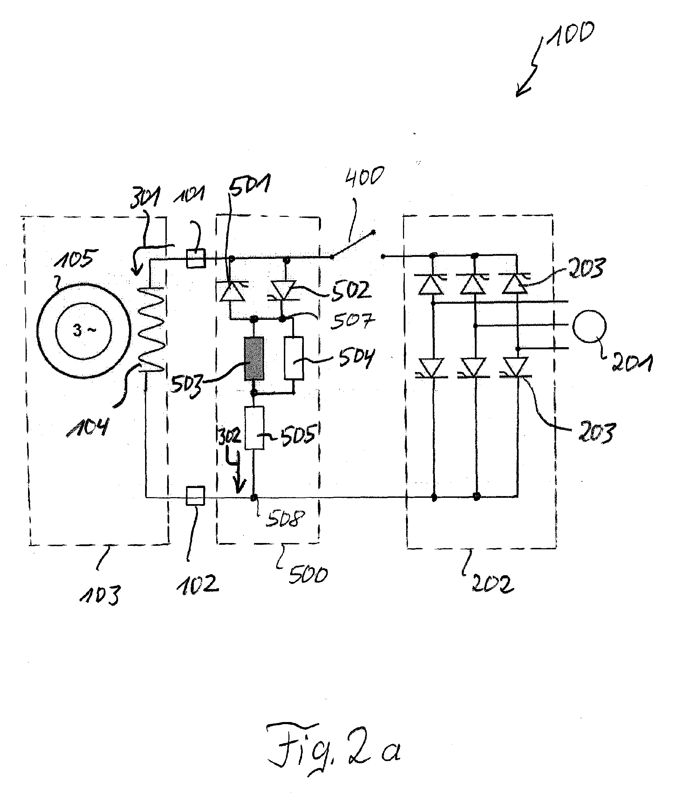

Figur 2a zeigt ein weiteres bevorzugtes Ausführungsbeispiel der vorliegenden Erfindung. Es sei darauf hingewiesen, dass Komponenten oder Teile, die bereits unter Bezugnahme auf Figur 1 beschrieben wurden, hier nicht mehr beschrieben werden, um überlappende Erläuterungen zu vermeiden. Das in Figur 2a gezeigte Ausführungsbeispiel unterscheidet sich von dem in Figur 1 gezeigten Ausführungsbeispiel darin, dass die Ableiteinrichtung 500 modifiziert ist. Wie obenstehend erwähnt, besteht das Ableitelement 503 aus einer ZnO-Materialzusammensetzung mit einem

hohen Nichtlinearitätskoeffizienten ($\alpha \approx 30$). Hier werden nachteilige Effekte aufgrund des hohen Nichtlinearitätskoeffizienten $\alpha$ durch Zusatzelemente verringert. In dem in Figur 2a gezeigten Ausführungsbeispiel sind derartige Zusatzelemente als ein ohmsches, d.h. lineares, Parallelwiderstandselement 504 und ein ohmsches Serienwiderstandselement 505 ausgeführt. Die Ableiteinrichtung 500 weist dabei das ohmsche Parallelwiderstandselement 504 parallel geschaltet zu dem Ableitelement 503 auf, während das ohmsche Serienwiderstandselement 505 in Reihe zu der Parallelschaltung aus dem Ableitelement 503 und dem ohmschen Parallelwiderstandselement 504 geschaltet ist.

Es sei darauf hingewiesen, dass, um geringere Nichtlinearitätskoeffizienten zu erhalten, beispielsweise auch lediglich ein Zusatzwiderstandselement bereitgestellt sein kann, d.h. das parallel geschaltete ohmsche Parallelwiderstandselement 504 oder das in Reihe geschaltete ohmsche Serienwiderstandselement 505.

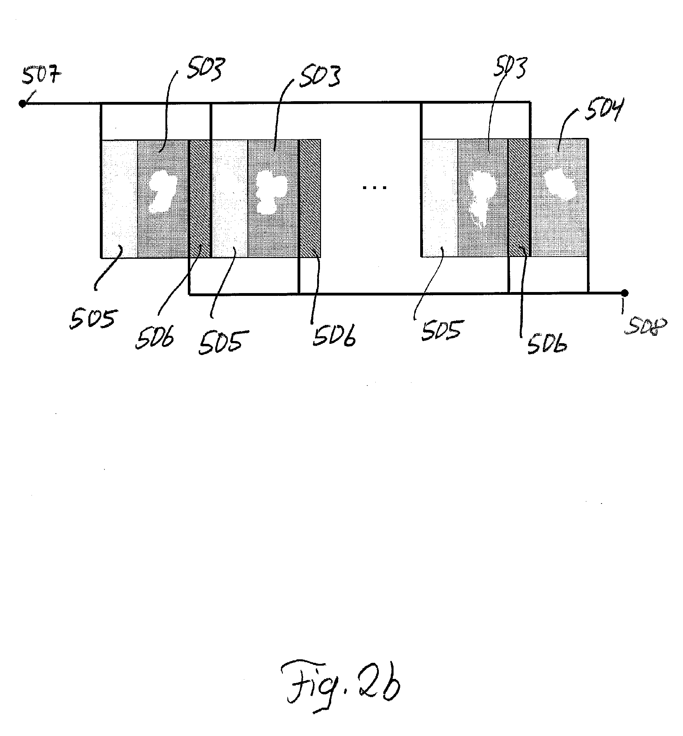

Figur 2b zeigt die mechanische Anordnung der Elemente 503, 504 und 505 zusammen mit einem Isolationselement 506, welches auch einfach aus Luft bestehen kann. Zwischen einer ersten Ableitelement-Anschlusseinheit 507 und einer zweiten Ableitelement-Anschlusseinheit 508 sind diese Elemente nunmehr derart angeordnet, dass das Ableitelement 503 parallel zu dem ohmschen Parallelwiderstandselement 504 geschaltet ist, wobei die Parallelschaltung des Ableitelements 503 und des ohmschen Parallelwiderstandselements 504 in Reihe zu dem ohmschen Serienwiderstandselement 505 geschaltet ist. Die Anschlüsse 507, 508 sind auch in Figur 2a gekennzeichnet.

In Figur 2b ist veranschaulicht, dass unterschiedliche Ableiteinrichtungen 500 parallel geschaltet sind. Daher ist es zweckmäßig, einen nicht zu großen Nichtlinearitätskoeffizienten $\alpha < 15$ vorzusehen, damit nicht, insbesondere bei einem Beginn einer Entregung, d.h. bei dem Start eines Fließens des Entregungsstroms 302, eine der Ableiteinrichtungen 500 durch einen zu hohen Entregungsstrom überlastet bzw. überhitzt wird.

Figur 3 veranschaulicht einen Graphen, in welchem in einem doppel-logarithmischen Maßstab der Verlauf der Entregungsspannung 303 als Funktion des Entregungsstroms 302 in einem Strombereich von 10 A bis 10 kA und einem Spannungsbereich zwischen 50 V und 1000 V skizziert ist. Derartige Strom-Spannungscharakteristika sind für drei Fälle dargestellt. Eine erste Strom-Spannungscharakteristik 601 (gestrichelte Linie) veranschaulicht den Fall, bei dem das Ableitelement 503 aus Siliziumcarbid(SiC)-Materialzusammensetzung ausgeführt ist, wobei der Nichtlinearitätskoeffizient $\alpha$ gleich 2,5 beträgt.

Eine zweite Kurve 602 (punktierte Linie) zeigt eine zweite Strom-Spannungscharakteristik für den Fall eines Zinkoxid-Varistors (ZnO) mit einem vergleichsweise hohen Nichtlinearitätskoeffizienten von 30 oder mehr ($\alpha >= 30$). Der gemäß dem vorliegenden Ausführungsbeispiel gewünschte Verlauf der Entregungsspannung 303 über dem Entregungsstrom 302 ist durch die dritte Kurve 603 (durchgezogener Kurvenverlauf) gegeben, welche eine dritte Strom-Spannungscharakteristik aufzeigt. Die durch das Bezugszeichen 603 dargestellte Kurve ergibt sich durch Ausführung des Ableitelements 503 als ein ZnO-Element, wobei sowohl ein ohmsches Parallelwiderstandselement 504, das einen Widerstandswert von 10 $\Omega$ aufweist, als auch ein ohmsches Serienwiderstandselement 505, das einen Widerstandswert von 0,1 $\Omega$ aufweist, bereitgestellt sind.

Wie aus Figur 3 ersehen werden kann, wird die Nichtlinearität $\alpha$ in dem Hochstrombereich durch das ohmsche Serienwiderstandselement 505 unterdrückt. Ferner wird die Nichtlinearität in der Strom-Spannungscharakteristik durch das ohmsche Parallelwiderstandselement 504 in dem Niedrigstrombereich (links in Figur 3) abgesenkt. Auf diese Weise wird ein paralleles Schalten von ZnO-Varistoren ermöglicht.

Figur 4 zeigt die zugehörigen Verläufe der Widerstandswerte für die unterschiedlichen Aufbauformen der Ableiteinrichtung 500. Aufgetragen in Figur 4 ist in einem Graphen der Ableitelementwiderstand 304 in Ohm als Funktion des Entregungsstroms 302 in einem doppelt-logarithmischen Maßstab, wobei der Strombereich von 1 A bis 10 kA angegeben ist, während der Widerstandsbereich von 0,1 $\Omega$ bis 1000 $\Omega$ angegeben ist.

In Figur 4 sind drei Widerstandsverläufe, d.h. ein erster Widerstandsverlauf 701, einer zweiter Widerstandsverlauf 702 und ein dritter Widerstandsverlauf 703 veranschaulicht. Der erste Widerstandsverlauf 701 entspricht der ersten Strom-Spannungscharakteristik 601 der Figur 3, d.h. der SiC-Materialkombination.

Einen hohen Nichtlinearitätskoeffizienten weist die Materialvariante ZnO auf, wobei in Figur 3 die zugehörige Strom-Spannungscharakteristik durch die Kurve 602 gezeigt ist, während der Widertandsverlauf in Figur 4 durch die Kurve 702 gezeigt ist. Hohe Nichtlinearitätskoeffizienten ($\alpha \approx 30$) sind zu vermeiden, derart, dass gemäß dem bevorzugten Ausführungsbeispiel der vorliegenden Erfindung der dritte Widerstandsverlauf 703 bevorzugt wird, welcher für niedrige Ströme bis ca. 100 A einen konstanten Widerstandswert von ca. 10 $\Omega$ aufweist, der sich dann für höhere Ströme absenkt.

Umgekehrt folgt daraus, dass bei einer Entregung von einer elektrischen Lasteinrichtung 103, die beispielsweise als ein induktives Element ausgebildet ist, zunächst bei einem hohen Strom ein niedriger Widerstand vorherrscht, wodurch ein niedriger Spannungsabfall an der Ableiteinrichtung 500 erreicht wird. Die kurze Entregungszeit gemäß obenstehender Gleichung (1) ergibt sich daraus, dass dieser Widerstand dann für eine abnehmende Stromstärke des Entregungsstroms 302 zunimmt.

Neben der gezielten Anordnung von ohmschen oder nicht-ohmschen Parallelwiderstandselementen 504 und ohmschen oder nicht-ohmschen Serienwiderstandselementen 505 in Kombination mit dem aus ZnO bestehenden oder zumindest ZnO umfassenden Ableitelement 503 ist es möglich, Ableitelemente, die das ZnO-Material enthalten, einer speziellen Behandlung zu unterziehen, um eine bestimmte Strom-Spannungscharakteristik einzustellen.

Bei kleinen Spannungen (unterhalb der Schaltspannung) kann der Widerstandswert verringert werden, indem der Leckstrom erhöht wird. Dies kann etwa durch geeignete Dotierung erfolgen, z.B. durch eine reduzierte Dotierung. So kann das Zinkoxid die Dotierstoffe Kobalt und Mangan weniger als 1mol%, vorzugsweise weniger als 0.1mol%, enthalten. Auch kann das Zinkoxid mit ausschließlich mit einem oder mehreren der Elemente Wismut, Barium, Antimon, und Aluminium dotiert sein. In einer Ausführungsform wird das Varistormaterial mit ausschließlich Wismut in einer Konzentration von 2%, oder zusätzlich mit Aluminium dotiert.

Zu einem ähnlichen Zweck kann auch eine Wärmebehandlung vorgesehen werden, z.B. eine Behandlung nach dem Sintern bei T = 200 bis 900°C. Die Wärmebehandlung erfolgt in Luft oder in reduzierender Atmosphäre wie etwa Stickstoff oder in Vakuum.

Auch kann eine Modifikation der Oberfläche oder eines Oberflächenbereichs des Varistormaterials die Nichtlinearität bzw. den Widerstandswert bei kleinen Spannungen verringern. Hierzu kann etwa die Oberfläche mit einem Laser oder einer Flamme aufgeschmolzen werden, oder durch eine chemische Behandlung modifiziert werden, wie z.Bsp. durch Eindiffusion von Dotierstoffen oder durch eine nasschemische Behandlung wie Ätzen, nasszierender Wasserstoff, etc.

Insbesondere zum Zweck der Parallelschaltung mehrerer Elemente ist es des Weiteren erwünscht, die Nichtlinearität für große Stromdichten, etwa $j > 100A/cm^2$ zu verringern.

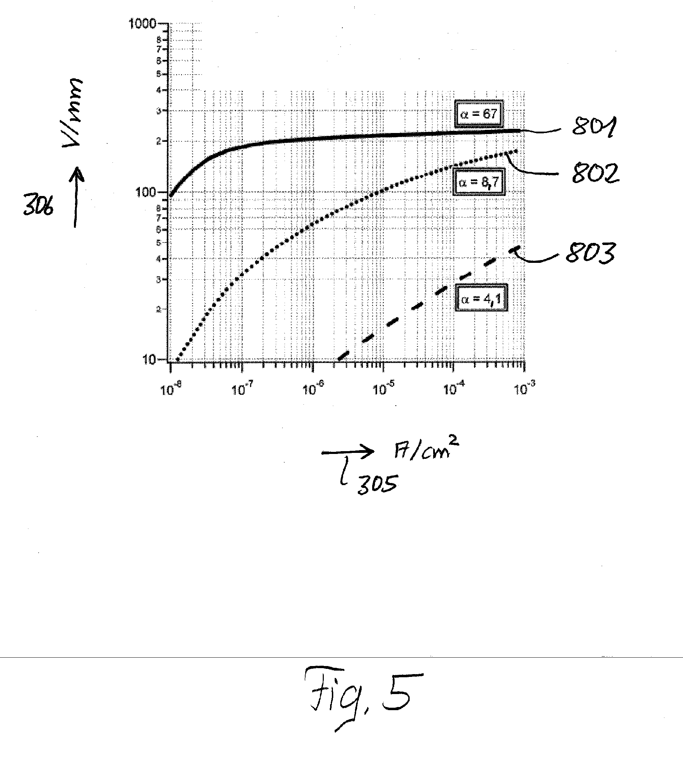

Hierzu können geeignet gewählte Prozessatmosphäre und Temperaturverlauf beitragen. So kann die Abkühlrate nach dem Sinterprozess geeignet eingestellt werden. Auch kann eine geeignete thermische Nachbehandlung durchgeführt werden, wie etwa Tempern bei einer Temperatur, welche niedriger als die Schmelztemperatur des Varistormaterials ist, aber hoch genug, um eine genügende Mobilität der Dotierstoffe zu gewährleisten, um hierdurch die Defektstruktur und somit die elektrischen Eigenschaften zu beeinflussen. Ein geeignetes Temperaturintervall für eine solche thermische Behandlung liegt etwa bei T= 200 - 900 °C, bevorzugt bei T = 500-750°C. Beispielsweise ergab in einem Fall ein achtstündiges Tempern bei 600°C eine Reduktion des Nichtlinearitätskoeffizienten $\alpha$ von ursprünglich $\alpha = 67$ auf $\alpha = 9$ (siehe Figur 5).

Ebenso kann die Defektstruktur des Varistors durch geeignete Dotierung beeinflusst werden, insbesondere durch Reduktion des Kobalt und Mangan Gehaltes: In einer Ausführungsform wurde eine binäre Mischung mit ausschließlich Wismut (2%) vorgenommen und ergab in Messungen einen Nichtlinearitätskoeffizienten $\alpha = 3.3 - 5.5$ (siehe Figur 5). Eine zusätzliche Dotierung mit Aluminium kann ebenfalls vorgenommen werden.

Des Weiteren kann die Nichtlinearität des Varistormaterials für hohe Stromdichten auch dadurch begrenzt werden, dass das Varistormaterial dünn dimensioniert wird. Dadurch werden bei gegebener äußerer Spannung die elektrischen Feldstärken im Inneren des Varistors erhöht. Bei ZnO-Varistoren ist der Nichtlinearitätskoeffizient $\alpha$, der im Schaltbereich (d.h. bei einer Stromdichten von $j = 0.1 mA/cm2$) einen Wert von $\alpha > 30$ hat, bei höheren Stromdichten im Bereich $j > 10A/cm2$ deutlich erniedrigt, nämlich $\alpha = 12$. Daher kann das Varistorelement so dünn dimensioniert werden, dass der Arbeitspunkt bei der Entregung zu hohen Stromdichten (gleichbedeutend mit hohen elektrischen Feldern) führt, für welche $\alpha$ reduziert ist.

Es sei hier angemerkt, dass es auch zum Vorteil sein kann in Bezug auf Kühlung oder kommerzielle Verfügbarkeit, statt eines einzigen Varistors mehrere Varistoren in Serie zu schalten.

Es sei weiterhin darauf hingewiesen, dass neben der erwähnten Varistor Vollkeramik auch Kompositverbindungen mit Varistorfüllstoffen eingesetzt werden können. Hierbei sind die Varistorfüllstoffe in eine Matrix eingelagert, wobei das Matrixmaterial Glas, Keramik, Kunststoff oder ein Metall sein kann. Der Betrag der Matrix zum elektrischen Widerstand des Varistorkomposits ist hierbei so zu wählen, dass die Kennlinie Bereiche mit $\alpha > 2$ aufweist, d.h., dass die Matrix nicht den Widerstand des Komposits vollständig dominiert.

Die oben für ZnO beschriebenen Effekte lassen sich auch für Varistorkeramiken auf der Basis von $TiO_2$, $SnO_2$ und $SrTiO_3$ erreichen.

Ableitelemente 503, die thermisch unterschiedlich behandelt oder unterschiedlich dotiert sind, weisen unterschiedliche Nichtlinearitätskoeffizienten $\alpha$ auf. Figur 5 zeigt dies für drei Fälle, d.h. $\alpha = 67$, $\alpha = 8,7$ bzw. $\alpha = 4,1$. Figur 5 zeigt im Gegensatz zu den Figuren 3 und 4 Verläufe der Ableitelementfeldstärke 306 als Funktion der Ableitelementstromdichte 305.

Als Einheiten sind Volt pro Millimeter (V/mm) für die Ableitelementfeldstärke 306, und Ampere pro Quadratzentimeter ($A/cm^2$) für die Ableitelementstromdichte 305 gewählt. Die Ausführungsformen des Ableitelements 503 sind entsprechend unterschiedlich, d.h. eine durchgezogene Kurve 801 bezeichnet einen ersten Feldstärkeverlauf eines herkömmlichen Varistors mit einem hohen Nichtlinearitätskoeffizienten ($\alpha = 67$), der für eine Anwendung mit parallel geschalteten Ableitelementen 503 problematisch ist. Die nächste Kurve 802 bezeichnet einen zweiten Feldstärkeverlauf für einen Varistor, welcher temperaturbehandelt ist (punktierte Linie, $\alpha = 8,7$).

Schließlich ist eine gestrichelte Kurve für eine binäre Mischung und moderaten Nichtlinearitätskoeffizienten von $\alpha = 4,1$ als ein dritter Feldstärkeverlauf 803 gezeigt. Es sei darauf hingewiesen, dass die Nichtlinearitätskoeffizienten $\alpha$, die zu den zweiten bzw. dritten Feldstärkeverläufen 802 bzw. 803 führen, für ein Ableitelement 503 zum Entregen einer induktiven Last bevorzugt sind.

Es zeigt sich insbesondere, dass die Varianten mit reduziertem Nichtlinearitätskoeffizienten gleichzeitig auch deutlich niedrigere Widerstandswerte bei kleinen Stromdichten aufweisen (die Kurven 802 und 803 liegen tiefer im E-j Diagram aus Figur 6 im Vergleich zu 801). Geeignete Dotierung und Wärmebehandlung weisen sich also vorteilhaft auf beide Anforderungen von beschränktem Widerstand und Nichtlinearitätskoeffizienten aus.

Scheiben- bzw. plattenförmige Ausführungsformen des Ableitelements sind bevorzugt.

Obwohl die vorliegende Erfindung vorstehend anhand bevorzugter Ausführungsbeispiele beschrieben wurde, ist sie darauf nicht beschränkt, sondern auf vielfältige Weise modifizierbar.

**BEZUGSZEICHENLISTE**

In den Figuren bezeichnen gleiche Bezugszeichen gleiche oder funktionsgleiche Komponenten oder Schritte.

| 100 | Elektronische Schaltvorrichtung |
|-----|----------------------------------|
| 101 | Erste Anschlusseinheit |
| 102 | Zweite Anschlusseinheit |
| 103 | Elektrische Lasteinrichtung |
| 104 | Rotorspule |
| 105 | Synchronmaschine |
| 201 | Energieversorgungseinrichtung |
| 202 | Stromrichtereinrichtung |
| 203 | Thyristorelement |
| 301 | Betriebsstrom |
| 302 | Entregungsstrom |
| 303 | Entregungsspannung |
| 304 | Ableitelementwiderstand |
| 305 | Ableitelementstromdichte |
| 306 | Ableitelementfeldstärke |
| 400 | Unterbrechereinheit (Feldschalter oder Entregungschalter) |
| 500 | Ableiteinrichtung / Entregungseinrichtung |
| 501 | Erster Ableitthyristor |
| 502 | Zweiter Ableitthyristor |
| 503 | Ableitelement / Entregungselement |
| 504 | ohmsches (lineares) Parallelwiderstandselement |
| 505 | ohmsches (lineares) Serienwiderstandselement |
| 506 | Isolationselement |

| 601 | Erste Strom-Spannungscharakteristik |
|---|---|
| 602 | Zweite Strom-Spannungscharakteristik |
| 603 | Dritte Strom-Spannungscharakteristik |
| 701 | Erster Widerstandsverlauf |
| 702 | zweiter Widerstandsverlauf |
| 703 | Dritter Widerstandsverlauf |
| 801 | Erster Feldstärkeverlauf |
| 802 | Zweiter Feldstärkeverlauf |
| 803 | Dritter Feldstärkeverlauf |
| 901-905 | Ableitelement- / Entregungselement-Bauformen |

**Patentansprüche**

**1.** Entregungselement für die Aufnahme eines Entregungsstroms von einer induktiven elektrischen Last (103), insbesondere einer Synchronmaschine, umfassend
mindestens einen Varistor (503) zur Aufnahme zumindest eines Teils des Entregungsstroms, wobei der Varistor eine Keramik auf der Basis von Zinkoxid (ZnO), Titanoxid ($TiO_2$), Zinnoxid ($SnO_2$) oder Strontiumtitanat ($SrTiO_3$) enthält, und wobei
das Entregungselement bei jeder für den Betrieb vorgesehenen Spannung einen Widerstandswert von weniger als 1 kOhm hat.

**2.** Entregungselement gemäß Anspuch 1 wobei das Varistormaterial dotiertes ZnO enthält.

**3.** Entregungselement nach einem der vorangehenden Ansprüche,
wobei der Gesamtwiderstand des Entregungselements einen Nichtlinearitätskoeffizienten von $\alpha > 2$ bei der Schaltspannung des Varistors (503) oder des Entregungselements hat.

**4.** Entregungselement nach einem der vorangehenden Ansprüche,
wobei der Widerstand des Entregungselements einen Nichtlinearitätskoeffizienten von $\alpha < 15$ oberhalb einer Stromdichte von $j = 100A/cm^2$ im Varistor (503) hat.

**5.** Entregungselement nach einem der vorangehenden Ansprüche,
wobei das Entregungselement bei jeder für den Betrieb vorgesehenen Spannung einen Widerstandswert von weniger als 100 Ohm hat.

**6.** Entregungselement nach einem der vorangehenden Ansprüche,
wobei mindestens zwei parallel geschaltete Varistoren (503) vorgesehen sind.

**7.** Entregungselement nach einem der vorangehenden Ansprüche,
wobei mindestens zwei seriell geschaltete Varistoren (503) vorgesehen sind.

**8.** Entregungselement nach einem der vorangehenden Ansprüche, weiter umfassend ein parallel zu dem mindestens einen Varistor (503) geschaltetes vorzugsweise ohmsches Parallelwiderstandselement (504).

**9.** Entregungselement nach einem der vorangehenden Ansprüche, weiter umfassend ein in Reihe zu dem mindestens einen Varistor (503) geschaltetes vorzugsweise ohmsches Serienwiderstandselement (505).

**10.** Entregungselement nach einem der vorangehenden Ansprüche, wobei das Varistor-Material (503) Zinkoxid enthält, welches mit einem oder mehreren Elementen aus der folgende Liste dotiert ist: Wismut, Kobalt, Mangan, Chrom, Zinn, Antimon, Silizium, Aluminium. Gallium, Indium, Nickel, Barium und die Elemente der seltenen Erden.

**11.** Entregungselement gemäß Anspruch 10, wobei das Zinkoxid die Dotierstoffe Kobalt und Mangan weniger als 1mol% enthält, vorzugsweise weniger als 0.1mol%.

**12.** Entregungselement gemäß Anspruch 10, wobei das Zinkoxid mit ausschließlich einem oder mehreren der Elemente aus folgender Gruppe dotiert ist: Wismut, Barium, Antimon, Aluminium.

**14.** Entregungselement nach einem der Ansprüche 10 bis 13, wobei das Varistor-Material in einer Vollkeramik ausgebildet ist, oder aus einer Kompositverbindung besteht, in welcher das Varistor-Material als Füllstoff in einem Matrixmaterial eingelagert ist, wobei das Matrixmaterial vorzugsweise ein Glas, eine Keramik, ein Kunststoff oder ein Metall ist.

**15.** Entregungselement nach Anspruch 14, wobei die Matrix elektrisch leitfähig mit einer Resistivität von weniger als 100 $\Omega$ m, bevorzugt von weniger als 1 $\Omega$ m ist, und wobei der Nichtlinearitätskoeffizient des Varistors bei der Schaltspannung des Varistors alpha > 2 beträgt.

**16.** Entregungseinrichtung (500) mit einem Entregungselement gemäß einem der vorangehenden Ansprüche, wobei die Entregungseinrichtung (500) weiter aufweist:

mindestens ein Schaltelement (501, 502), das vorzugsweise als Thyristor ausgebildet ist, zum Schalten eines Strompfads des Entregungsstroms (302), der von der elektrischen Last (103) zu dem Entregungselement führt.

**17.** Synchronmaschine mit einer Entregungseinrichtung (500) gemäß Anspruch 16, wobei die elektrische Last (103) eine Wicklung (104) der Synchronmaschine umfasst, und wobei das Entregungselement parallel zu der elektrischen Last (103) geschaltet ist.

**18.** Verfahren zur Herstellung eines Entregungselements für die Aufnahme eines Entregungsstroms von einer induktiven elektrischen Last, insbesondere einer Synchronmaschine, umfassend:

- Herstellen eines Varistors (503) enthaltend eine Keramik auf der Basis von Zinkoxid (ZnO), Titanoxid ($TiO_2$), Zinnoxid ($SnO_2$) oder Strontiumtitanat ($SrTiO_3$); und
- Behandeln des Varistors, etwa mittels Dotierung und / oder einer thermischen Behandlung, so dass das Entregungselement bei jeder für den Betrieb vorgesehenen Spannung einen Widerstandswert von weniger als 1 kOhm hat.

**19.** Verfahren nach Anspruch 18, wobei das Behandeln umfasst:

Dotieren, vorzugsweise ausschließliches Dotieren, der Keramik mit einem oder mehreren der folgenden: Wismut, Kobalt, Mangan, Chrom, Zinn, Antimon, Silizium, Aluminium. Gallium, Indium, Nickel, Barium und Elemente der seltenen Erden.

**20.** Verfahren nach einem der Ansprüche 18 und 19, wobei das Behandeln einen Sinter-Schritt und danach ein Abkühlen mit einer Abkühlrate für den Temperaturbereich zwischen 1000°C und der Sintermaximaltemperatur von weniger als 40°C/h beinhaltet.

**21.** Verfahren nach einem der Ansprüche 17 bis 20, wobei das Behandeln umfasst:

Thermische Behandlung, vorzugsweise nach dem Dotieren und vorzugsweise in reduzierender Athmosphäre, bei einer Temperatur zwischen 200°C und 900°C, bevorzugt bei einer Temperatur zwischen 500°C und 750°C.

**22.** Verfahren nach einem der Ansprüche 17 bis 21, wobei das Behandeln umfasst:

Oberflächenbehandeln des Varistor-Materials (503) durch Aufschmelzen, vorzugsweise mittels eines Lasers, und / oder durch eine chemische Behandlung, vorzugsweise Ätzen mittels einer Säure.

**23.** Verfahren zum Abschalten einer induktiven elektrischen Last (103), insbesondere einer der Rotorspule einer Synchronmaschine, umfassend:

- Trennen der elektrischen Last (103) von einer Stromquelle (201) mittels einer Unterbrechereinheit, insbesondere mittels eines Feldschalters (400); und
- Ableiten eines Entregungsstroms (302) von der elektrischen Last (103) über ein Entregungselement (500) nach einem der Ansprüche 1 bis 15.

Fig. 1

Fig. 2 a

Fig. 2b

Fig. 3

Fig. 4

Fig, 5

**EP 2 063 524 A1**

Europäisches
Patentamt

**EUROPÄISCHER RECHERCHENBERICHT**

Nummer der Anmeldung

EP 07 12 1509

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | DE 19 59 893 A1 (ELIN UNION AG) 18. Juni 1970 (1970-06-18) * Seite 2, letzte Zeile - Seite 3 * * Anspruch 1 * * Abbildung 1 * ----- | 1-23 | INV. H02P3/04 |
| Y | CH 403 046 A (OERLIKON MASCHF [CH]) 30. November 1965 (1965-11-30) * Seite 1, Zeilen 46-55 * * Abbildung 1 * ----- | 1-23 | |
| Y | AT 256 259 B (AEG AUSTRIA GES M B H) 10. August 1967 (1967-08-10) * Seite 2, Zeilen 13-27 * * Abbildung 1 * ----- | 1-23 | |
| Y | JP 03 109261 A (MATSUSHITA ELECTRIC IND CO LTD) 9. Mai 1991 (1991-05-09) * Zusammenfassung * & DATABASE WPI Thomson Scientific, London, GB; AN 181360 "Voltage dependent nonlinear resistor ceramic compsn. - comprising mainly strontium-barium-titanium oxide, used to mfr. varistors" * Zusammenfassung * ----- | 1-23 | |
| | | | **RECHERCHIERTE SACHGEBIETE (IPC)** |
| | | | H02P |

Der vorliegende Recherchenbericht wurde für alle Patentansprüche erstellt

| Recherchenort | Abschlußdatum der Recherche | Prüfer |
|---|---|---|
| München | 26. Juni 2008 | Roider, Anton |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

20

**ANHANG ZUM EUROPÄISCHEN RECHERCHENBERICHT
ÜBER DIE EUROPÄISCHE PATENTANMELDUNG NR.**

EP 07 12 1509

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

26-06-2008

| Im Recherchenbericht angeführtes Patentdokument | | Datum der Veröffentlichung | Mitglied(er) der Patentfamilie | | Datum der Veröffentlichung |
|---|---|---|---|---|---|
| DE 1959893 | A1 | 18-06-1970 | AT | 289963 B | 10-05-1971 |
| CH 403046 | A | 30-11-1965 | KEINE | | |
| AT 256259 | B | 10-08-1967 | KEINE | | |
| JP 3109261 | A | 09-05-1991 | JP | 2789714 B2 | 20-08-1998 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6021051 A

- WO 2005017933 A

**In der Beschreibung aufgeführte Nicht-Patentliteratur**

- **ZINKE, SEITHER.** *Widerstände, Kondensatoren, Spulen und ihre Werkstoffe,* 1982

- Ceramic Transactions: Advances in Varistor Technology. The American Ceramic Society, Inc, 1988, vol. 3